# EUROPEAN PATENT SPECIFICATION

(11) **EP 1 240 792 B1**
(45) Date of publication and mention of the grant of the patent: **22.02.2006**
(21) Application number: 00986144.4
(22) Date of filing: 08.12.2000
(51) Int. Cl.: H04Q 7/30

(54) **PROCEDURE AND ARRANGEMENT TO MAKE REDUNDANCY FOR A RADIO COMMUNICATION SYSTEM**
VERFAHREN UND ANORDNUNG ZUR REDUNDANZEINRICHTUNG FÜR EIN FUNKKOMMUNIKATIONESSYSTEM
PROCEDURE ET SYSTEME PERMETTANT LA REDONDANCE D'UN SYSTEME DE RADIOCOMMUNICATION

(30) Priority: 09.12.1999 SE 9904491
(43) Date of publication of application: 18.09.2002
(73) Proprietor: TELIA AB, 123 86 Farsta (SE)
(72) Inventor: SILLEN, Torbjörn, S-129 39 Hägersten (SE)
(74) Representative: Hopfgarten, Nils
(86) International application number: PCT/SE2000/002473
(87) International publication number: WO 2001/043470

(56) References cited:
- EP-A2- 0 899 899
- WO-A2-98/48583
- US-A- 5 959 971

## Description

### Technical field

The present invention relates to an arrangement and a procedure to make redundancy in the transmission for different radio systems, especially for packet switched transmission with small bandwidth. The invention more exactly aims at making redundancy for a first radio communication system by deriving advantage from a second radio communication system, which radio communication systems have base stations located together.

### Background

For certain services, such as coast-radio, TETRA (Trans European Trunked Radio), Mobitex etc, redundancy is wanted as far as to the base station (BTS). In all these systems it is a matter of packet switched transmission with small bandwidth, up to 64 kbit/s. Digging for laying a new cable, or setting up a radio link, is very expensive, especially when it is a matter of such a low capacity.

There often is a GSM base station located together with other base stations as, for instance, coast-radio or TETRA, in a base station site. The two different base stations even can have their respective antennas mounted on the same mast. In known way at least part of the same cable is utilized, on which the transmission within the different systems are multiplexed together, between the base station site and respective base station control unit (BSC).

One aim of the present invention is, for a first radio communication system with a first base station, to benefit from the presence of a second base station, belonging to a second radio communication system, which base stations are located together in a base station site. More exactly, the invention aims at providing an arrangement and a procedure to utilize GPRS (General Packet Radio Service) to create redundancy for a first radio communication system as, for instance, coast-radio or TETRA.

U.S. Patent US-A-5 959 971 discloses a system wherein a base station controller monitors transmisson lines to detect a failure and provides protection switching.

### Summary of the invention

Consequently the present invention relates to an arrangement and a procedure to make transmission redundancy for a first radio communication system, for which a transmission connection is arranged for communication between a first base station control unit and a first base station. Said transmission connection is also utilized for communication between a second base station control unit and a second base station, belonging to a second radio communication system. Consequently said base stations are located together in a base station site, and the communication with respective base station is made multiplexed on said transmission connection. Characteristic of the invention is that a first supervisory unit is connected to said first base station control unit and a second supervisory unit is connected to said first base station. The second supervisory unit transmits supervisory data to the first supervisory unit, and the first supervisory unit is, depending on said supervisory data, arranged to selectively connect the first base station control unit to said first base station, either via said transmission connection, or via a third base station in said second radio communication system.

By said transmission connection being used in common for said first radio communication system, which can be, for instance, a coast-radio or TETRA, and said second radio communication system which preferably is GPRS, the GPRS-system consequently can on the one hand be utilized to supervise the transmission connection itself, and on the other be utilized as an alternative transmission path via the third base station in the GPRS-system if, for instance, a break should occur at said transmission connection.

### Brief description of the drawings

Preferred embodiments will be presented in detail below, with reference to the only drawing, where:

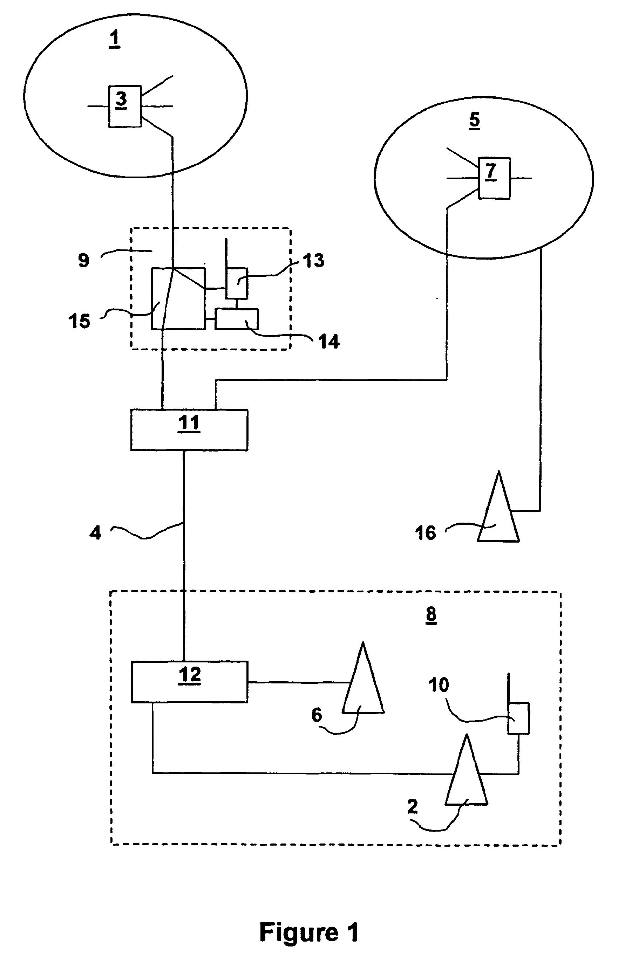

Figure 1 shows an embodiment of the arrangement according to the present invention.

### Detailed description of preferred embodiments

Below is described how a first radio communication system, TETRA, is located together with a second radio communication system GPRS. It, however, should be understood that said first and second radio communication system can be of other kinds, as has previously been mentioned, to the extent it will make possible an embodiment of the invention.

At the top in Figure 1, the not specified part of the TETRA-system 1 is symbolized by a ring-shaped object in which a first base station control unit 3 is arranged. This is drawn with a number of branches to symbolize that a base station control unit normally is connected to a plurality of base stations, but it need of course not necessarily be so. The base station control unit 3 is connected via one for the invention arranged supervisory unit 9, which will be described in more details below, to a first multiplexer/demultimultiplexer 11. At the upper, right part of the figure is likewise a not specified part of a GPRS-system 5, symbolized by a ring, in similar way including a second base station control unit 7 for the GPRS-system. The base station control unit 7 is also connected to the multiplexer/demultiplexer 11. One for the system common transmission connection 4, preferably a buried cable, is drawn from the first multiplexer/demultiplexer 11 to a second multiplexer/demultiplexer 12, which is arranged in a base station site 8. To this second multiplexer/demultiplexer 12, a first base station 2 belonging to the TETRA-system 1, and a second base station 6 belonging to the GPRS-system 5, are connected. To the first base station 2 is, in addition, a second supervisory unit 10 connected. From the GPRS-system 5 then is also a connection to a third base station 16. This can be, but need not be, connected to the same base station control unit 7.

The first supervisory unit 9 includes a radio terminal 13, a control device 14 and a switching device 15. Further, the second supervisory device 10 includes a radio terminal. The dashed connection lines in the switching device 15 and between the first base station 2 and the radio terminal 10 aims at indicating fixed connections, but that these normally are not utilized.

At normal operation, the transmission is directed from the base station control unit 3 in the TETRA-system 1 straight through the switching device 15 and via the transmission connection 4 to the base station 2, with which a TETRA-terminal (not shown) can communicate via radio. The for the invention arranged radio terminal 10 is a GPRS-terminal arranged to periodically transmit supervisory data via the GPRS-system 5 to the GPRS-terminal 13 in the first supervisory unit 9. These supervisory data are preferably simple/single signals in form of OK-flags. The radio terminal 10 at that transmits OK-flags via radio to the GPRS base station 6, which is located together with the TETRA base station 2. The OK-flags are transmitted from there via the fixed network of the GPRS-system 5 to any GPRS base station (not drawn) with coverage for the place where the first supervisory unit 9 is located. The last distance the OK-flags consequently transmit via radio from said not drawn GPRS base station to the GPRS-terminal 13. The control device 14 is connected to the GPRS-terminal 13, and checks that the OK-flags which have been transmitted from GPRS-terminal 10 arrive within approved time interval.

If the ordinary signal path to the TETRA base station 2 should be cut off, data are, according to the present invention, instead transmitted over GPRS. Modulation/encoding algorithms are continuously improved and 64 kbit/s packet switching will be realised in a near future. The invention, however, requires that there is one more GPRS base station 16 sufficiently close to said second supervisory unit 10 and its GPRS-terminal, to make communication possible between the terminal 10 and the GPRS base station 16. With extended range and a good mobile antenna receiver, a GPRS-/GSM base station will reach a mobile terminal at a distance of up to 120 km under favorable conditions.

Because the GPRS-terminal 10 and the GPRS base station 6 are in the same base station site 8, and therefore from a distance point of view are closely located to each other, the OK-flags which are transmitted from the GPRS-terminal 10 will in the normal case be picked up by the fixed network of the GPRS-station via the base station 6. If the control device 14 should detect that the GPRS-terminal 13 does not receive OK-flags via GPRS-station 6 within approved interval, a breakdown in signal transmission consequently has occurred somewhere between the GPRS-terminal 10 and the not drawn GPRS base station which provides for radio communication with the GPRS-terminal 13. If the GPRS-terminal 13 should again get contact with the GPRS-terminal 10, though via another GPRS base station 16, there is a great probability that the break has occurred at any of the for the system common parts: The multiplexers/demultiplexers 11 or 12, or the transmission connection 4. Consequently, the control unit 14 controls, when it has detected that the GPRS-terminal 13 has got contact with the GPRS-terminal 10 via another base station 16, the switching device 15 to the position which is dashed in the figure. The communication path from the base station control unit 3 is at that connected to the GPRS-terminal 13. From there the communication is managed entirely by the GPRS-system 5, first via radio to a not drawn GPRS base station, then via the fixed GPRS-network to the base station 16, and from there via radio to the terminal 10. From the terminal 10 the communication is reset to TETRA via the dashed connection path to the fixed base station 2, from where the communication can be forwarded to TETRA-mobile in question within the coverage area of the base station 2.

If it is the GPRS base station 6 that has failed, which should have not influenced the communication of the TETRA base station 2 with its base station control unit 3, the switching to GPRS is made without being needed. The transmission, however, will reach its goal, which is the main point. When the equipment that has broken down has been repaired, the ordinary transmission path is connected again, irrespective of whether it has occurred on the transmission connection 4 or, for instance, at the GPRS base station 6. The communication over the transmission connection 4 is restored as soon as the control unit 14 detects the OK-flags via the base station 6.

In one embodiment of the present invention, the control device 14 finds out whether a break has occurred by simply detecting that an OK-flag that has been expected to arrive within a certain interval, has failed to come. In another embodiment, the OK-flag in the fixed part of the GPRS-system 5 is improved by an indication about which base station that has received the OK-flag from the supervisory unit 10.

Consequently the present invention relates to an arrangement to make transmission REDUNDANCY for a first radio communication system 1, for which a transmission connection 4 is arranged for communication between a first base station control unit 3 and a first base station 2, multiplexed with communication between a second base station control unit 7 and a second base station 6 in a second radio communication system 5. The base stations 2,6 are at that located together in a base station site 8. A first supervisory unit 9 is connected to said first base station control unit 3, and is arranged, depending on supervisory data from a second supervisory unit 10, to selectively connect said first base station control unit 3 to said first base station 2, either via said transmission connection 4, or via a third base station 16 in said second radio communication system 5 to said second supervisory unit 10, connected to said first base station 2.

One preferred embodiment of the invention includes a first multiplexer/demultiplexer 11, arranged to connect respective base station control units 3,7 to said transmission connection 4.

One preferred embodiment of the invention includes further a second multiplexer/demultiplexer 12, arranged to connect respective base station 2,6 to said transmission connection 4. Said transmission connection 4 is preferably a buried cable.

In a preferred embodiment of the invention, said first supervisory unit 9 includes a first radio terminal 13, and said second supervisory unit includes a second radio terminal 10, which radio terminals 10,13 are arranged to communicate via a base station 6,16 in said second radio communication system 5. Said second radio terminal 10 is arranged to, with a given interval, transmit said supervisory data via a base station 6,16 in said second radio communication system 5, to said first radio terminal 13.

In one preferred embodiment of the invention, said first supervisory unit 9 includes a control device 14, adapted to detect if said supervisory data are received from said second radio terminal 10 and with said given time interval. A switching device 15 in said first supervisory unit 9 is arranged to, when said control device 14 detects that said supervisory data are received within said time interval, connect said first base station control unit 3 to said first base station 2 via said transmission connection 4.

In one preferred embodiment of the invention, said second radio terminal 10 is arranged primarily to transmit said supervisory data via said second base station 6 and, in case that said control device 14 does not detect that said supervisory data are received within said time interval, to establish a connection with said first radio terminal 13 via a third base station 16 belonging to said second radio communication system 5.

In one preferred embodiment of the invention, said switching device 15, in case that said control device 14 does not detect said supervisory data within said time interval, is arranged to connect said first base station control unit 3 via said first radio terminal 13, over said second radio communication system 5, via said second radio terminal 10 to said first base station 2.

The invention also relates to a procedure to make transmission redundancy for a first radio communication system 1, for which a transmission connection 4 is arranged for communication between a first base station control unit 3 and a first base station 2, multiplexed with communication between a second base station control unit 7 and a second base station 6 in a second radio communication system 5. The base stations 2,6 are at that located together in a base station site 8. The procedure according to the invention is characterized in the steps:
- to transmit supervisory data from a second supervisory unit 10 connected to said first base station 2 to a first supervisory unit 9 connected to said first base station control unit 3, and
- to selectively connect first base station control unit 3 to said first base station 2 via said transmission connection 4, or via a third base station 16 in said second radio communication system 4 to said second supervisory unit 10, depending on supervisory data from said second supervisory unit 10.

A first radio terminal 13 included in the first supervisory unit 9 communicates via a base station 6,16 in said second radio communication system 5 with a second radio terminal 10 included in the second supervisory unit 10, and said second radio terminal 10 transmits said supervisory data with a given interval via a base station 6, 16 in said second radio communication system 5, to said first radio terminal 13.

Said first supervisory unit 9 detects, by means of a control device 14, if said supervisory data are received from said second radio terminal 10 with said given time interval. A switching device 15 in said first supervisory unit 9 connects said first base station control unit 3 to said first base station 2 via said transmission connection 4, when said control device 14 detects that said supervisory data are received within said time interval.

Said second radio terminal 10 transmits primarily said supervisory data via said second base station 6 and, in case that said control device 14 does not detect that said supervisory data are received within said time interval, the second radio terminal 10 establishes a connection with said radio terminal 13 via a third base station 16 belonging to said second radio communication system 5.

In case that said control device 14 does not detect said supervisory data within said time interval, said switching device 15 connects said first base station control unit 3 via said first radio terminal 13 over said second radio communication system 5, via said second radio terminal 10 to said first base station 2.

Said first 1 and second 5 radio communication systems provide preferably packet switched transmission with small bandwidth, preferably less than 64 kbit/s. In one preferred embodiment of the invention, said first radio communication system 1 is coast-radio. In another embodiment of the invention, said first radio communication system 1 is ETRA. In yet another preferred embodiment of the invention, said first radio communication system 1 is Mobitex.

In one preferred embodiment of the invention, said second radio communication system 5 is GPRS.

The invention is only limited by the scope defined by the enclosed patent claims.

## Claims

1. Arrangement to make transmission redundancy for a first radio communication system (1), where a transmission connection (4) is arranged for communication between a first base station control unit (3) and a first base station (2), multiplexed with communication between a second base station control unit (7) and a second base station (6) in a second radio communication system (5), which base stations (2,6) are located together in a base station site (8), **characterized in** a first supervisory unit (9) connected to said first base station control unit (3), arranged to selectively connect said first base station control unit(3) to said first base station (2) via said transmission connection (4), or via a third base station (16) in said second radio communication system (5) to a second supervisory unit (10), connected to said first base station (2), depending on supervisory data from said second supervisory unit (10).

2. Arrangement as claimed in patent claim 1, including a first multiplexer/demultiplexer (11), arranged to connect respective base station control units (3,7) to said transmission connection (4).

3. Arrangement as claimed in patent claim 2, including a second multiplexer/demultiplexer (12), arranged to connect respective base stations (2,6) to said transmission connection (4).

4. Arrangement as claimed in patent claim 3, where said transmission connection (4) includes a cable.

5. Arrangement as claimed in patent claim 4, where said first supervisory unit (9) includes a first radio terminal (13), and where said second supervisory unit includes a second radio terminal (10), which radio terminals (10,13) are arranged to communicate via a base station (6,16) in said second radio communication system (5).

6. Arrangement as claimed in patent claim 5, where said second radio terminal (10) is arranged to, with a given interval, transmit said supervisory data via a base station (6,16) in said second radio communication system (5), to said first radio terminal (13).

7. Arrangement as claimed in patent claim 6, where said first supervisory unit (9) includes a control device (14), adapted to detect if said supervisory data are received from said second radio terminal (10) with said given time interval.

8. Arrangement as claimed in patent claim 7, where a switching device (15) in said first supervisory unit (9) is arranged to, when said control device (14) detects that said supervisory data are received within said time interval, connect said first base station control unit(3) to said first base station (2) via said transmission connection (4).

9. Arrangement as claimed in patent claim 8, where said second radio terminal (10) is arranged to primarily transmit said supervisory data via said second base station (6) and, in case that said control device (14) does not detect that said supervisory data are received within said time interval, establish a connection with said first radio terminal (13) via a third base station (16) belonging to said second radio communication system (5).

10. Arrangement as claimed in patent claim 9, where said switching device (15), in case that said control device (14) does not detect said supervisory data within said time interval, is arranged to connect said first base station control unit (3) via said first radio terminal (13), over said second radio communication system (5), via said second radio terminal (10), to said first base station (2).

11. Arrangement as claimed in patent claim 10, where said first (1) and second (5) radio communication system provide packet switched transmission with small bandwidth, preferably less than 64 kbit/s.

12. Arrangement as claimed in patent claim 11, where said first radio communication system (1) is coast-radio.

13. Arrangement as claimed in patent claim 11, where said first radio communication system (1) is TETRA.

14. Arrangement as claimed in patent claim 11, where said first radio communication system (1) is Mobitex.

15. Arrangement as claimed in any of the previous patent claims, where said second radio communication system (5) is GPRS.

16. Procedure to make transmission redundancy for a radio communication system (1), in which a transmission connection (4) is arranged for communication between a first base station control unit (3) and a first base station (2) in a base station site (8), muliplexed with communication between a second base station control unit (7) and a second base station (6) in a second radio communication system (5), which base stations (2,6) are located together in said site (8),
**characterized in** the steps:
- to transmit supervisory data from a second supervisory unit (10) connected to said first base station (2) to a first supervisory unit (9) connected to said first base station control unit (3);
- to selectively connect said first base station control unit (3) to said first base station (2) via said transmission connection (4), or via a third base station (16) in said second radio communication system (4) to said second supervisory unit (10), depending on supervisory data from said second supervisory unit (10).

17. Procedure as claimed in patent claim 16, where a first radio terminal (13) included in the first supervisory unit (9) communicates via a base station (6,16) in said second radio communication system (5) with a second radio terminal (10) included in the second supervisory unit (10).

18. Procedure as claimed in patent claim 17, where said second radio terminal (10) transmits said supervisory data with a given interval via a base station (6,16) in said second radio communication system (5), to said first radio terminal (13).

19. Procedure as claimed in patent claim 18, where said first supervisory unit (9) with a control device (14) detects if said supervisory data are received from said second radio terminal (10) with said given time interval.

20. Procedure as claimed in patent claim 19, where a switching device (15) in said first supervisory unit (9) connects said first base station control unit (3) to said first base station (2) via said transmission connection (4), when said control device (14) detects that said supervisory data are received within said time interval.

21. Procedure as claimed in patent claim 20, where said second radio terminal (10) primarily transmits said supervisory data via said second base station (6) and, in case that said control device (14) does not detect that said supervisory data are received within said time interval, establishes a connection with said first radio terminal (13) via a third base station (16) belonging to said second radio communication system (5).

22. Procedure as claimed in patent claim 21, where said switching device (15) connects said first base station control unit (3) via said first radio terminal (13) over said second radio communication system (5), via said second radio terminal (10) to said first base station (2), in case that said control device (14) does not detect said supervisory data within said time interval.

23. Procedure as claimed in patent claim 22, where said first (1) and second (5) radio communication system provide packet switched transmission with small bandwidth, preferably less than 64 kbit/s.

24. Procedure as claimed in patent claim 23, where said first radio communication system (1) is coast-radio.

25. Procedure as claimed in patent claim 23, where said first radio communication system (1) is TETRA.

26. Procedure as claimed in patent claim 23, where said first radio communication system (1) is Mobitex.

27. Procedure as claimed in any of the patent claims 16-26, where said second radio communication system (5) is GPRS.

## Patentansprüche

1. Anordnung zur Erzeugung von Übertragungsredundanz für ein erstes Funkkommunikationssystem (1), wo eine Übertragungsverbindung (4) für Kommunikation zwischen einer ersten Basisstationsteuereinheit (3) und einer ersten Basisstation (2) angeordnet ist, die mit Kommunikation zwischen einer zweiten Basisstationssteuereinheit (7) und einer zweiten Basisstation (6) in einem zweiten Funkkommunikationssystem (5) multiplexiert ist, wobei die Basisstationen (2,6) zusammen an einem Basisstationsstandort (8) angeordnet sind, **gekennzeichnet durch** eine erste Überwachungseinheit (9), die mit der ersten Basisstationssteuereinheit (3) verbunden ist und dazu ausgebildet ist, selektiv die erste Basisstationssteuereinheit (3) mit der ersten Basisstation (2) über die Übertragungsverbindung (4) oder über eine dritte Basisstation (16) in dem zweiten Funkkommunikationssystem (5) mit einer zweiten Überwachungseinheit (10), die mit der ersten Basisstation (2) verbunden ist, in Abhängigkeit von Überwachungsdaten von der zweiten Überwachungseinheit (10) zu verbinden.

2. Anordnung nach Patentanspruch 1, die einen ersten Multiplexer/Demultiplexer (11) einschließt, der dazu ausgebildet ist, entsprechende Basisstationssteuereinheiten (3,7) mit der Übertragungsverbindung (4) zu verbinden.

3. Anordnung nach Patentanspruch 2, die einen zweiten Multiplexer/Demultiplexer (12) einschließt, der dazu ausgebildet ist, entsprechende Basisstationen (2,6) mit der Übertragungsverbindung (4) zu verbinden.

4. Anordnung nach Patentanspruch 3, wobei die Übertragungsverbindung (4) ein Kabel einschließt.

5. Anordnung nach Patentanspruch 4, wo die erste Überwachungseinheit (9) ein erstes Funkendgerät (13) einschließt und wo die zweite Überwachungseinheit ein zweites Funkendgerät (10) einschließt, welche Funkendgeräte (10, 13) dazu ausgebildet sind, über eine Basisstation (6, 16) in dem zweiten Funkkommunikationssystem (5) zu kommunizieren.

6. Anordnung nach Patentanspruch 5, wo das zweite Funkendgerät (10) dazu ausgebildet ist, mit einem vorgegebenen Intervall die Überwachungsdaten über eine Basisstation (6,16) in dem zweiten Funkkommunikationssystem (5) zu dem ersten Funkendgerät (13) zu senden.

7. Anordnung nach Patentanspruch 6, wo die erste Überwachungseinheit (9) eine Steuereinrichtung (14) aufweist, die dazu ausgebildet ist, festzustellen, ob die Überwachungsdaten von dem zweiten Funkendgerät (10) mit dem vorgegebenen Zeitintervall empfangen werden.

8. Anordnung nach Patentanspruch 7, wo eine Schalteinrichtung (15) in der ersten Überwachungseinheit (9) dazu ausgebildet ist, die erste Basisstationssteuereinheit (3) mit der ersten Basisstation (2) über die Übertragungsverbindung (4) zu verbinden, wenn die Steuereinrichtung (14) feststellt, dass die Überwachungsdaten innerhalb des Zeitintervalls empfangen werden.

9. Anordnung nach Patentanspruch 8, wo das zweite Funkendgerät (10) dazu ausgebildet ist, primär die Überwachungsdaten über die zweite Basisstation (6) zu senden und im Falle, dass die Steuereinrichtung (14) nicht feststellt, dass Überwachungsdaten innerhalb des Zeitintervalls empfangen werden, eine Verbindung mit dem ersten Funkendgerät (13) über eine dritte Basisstation (16) einrichtet, die zu dem zweiten Funkkommunikationssystem (5) gehört.

10. Anordnung nach Patentanspruch 9, wo die Schalteinrichtung (15) im Falle, dass die Steuereinrichtung (14) die Überwachungsdaten innerhalb des Zeitintervalls nicht feststellt, dazu ausgebildet ist, die erste Basisstationssteuereinheit (3) über das erste Funkendgerät (13), über das zweite Funkkommunikationssystem (5), über das zweite Funkendgerät (10) mit der ersten Basisstation (2) zu verbinden.

11. Anordnung nach Patentanspruch 10, wo das erste (1) und das zweite (5) Funkkommunikationssystem paketvermittelte Übertragung mit kleiner Bandbreite zur Verfügung stellt, vorzugsweise weniger als 64 kbit/s.

12. Anordnung nach Patentanspruch 11, wo das erste Funkkommunikationssystem (1) Küstenfunk ist.

13. Anordnung nach Patentanspruch 11, wo das erste Funkkommunikationssystem (1) TETRA ist.

14. Anordnung nach Patentanspruch 11, wo das erste Funkkommunikationssystem (1) Mobitex ist.

15. Anordnung nach einem der vorangehenden Patentansprüche, wo das zweite Funkkommunikationssystem (5) GPRS ist.

16. Verfahren zur Erzeugung von Übertragungsredundanz für ein Funkkommunikationssystem (1), in dem eine Übertragungsverbindung (4) für Kommunikation zwischen einer ersten Basisstationssteuereinheit (3) und einer ersten Basisstation (2) an einem Basisstationsstandort (8) angeordnet ist, die mit Kommunikation zwischen einer zweiten Basisstationssteuereinheit (7) und einer zweiten Basisstation (6) in einem zweiten Funkkommunikationssystem (5) multiplexiert ist, welche Basisstationen (2,6) zusammen an dem Standort (8) angeordnet sind, **gekennzeichnet durch** die Schritte:
- Überwachungsdaten von einer zweiten Überwachungseinheit (10), die mit der ersten Basisstation (2) verbunden ist, zu einer ersten Überwachungseinheit (9) zu senden, die mit der ersten Basisstationssteuereinheit (3) verbunden ist;
- selektiv die erste Basisstationssteuereinheit (3) mit der ersten Basisstation (2) über die Übertragungsverbindung (4) oder über eine dritte Basisstation (16) in dem zweiten Funkkommunikationssystem (5) mit der zweiten Überwachungseinheit (10) in Abhängigkeit von Überwachungsdaten von der zweiten Überwachungseinheit (10) zu verbinden.

17. Verfahren nach Patentanspruch 16, wo ein erstes Funkendgerät (13), das in der ersten Überwachungseinheit (9) enthalten ist, über eine Basisstation (6,16), in dem zweiten Funkkommunikationssystem (5) mit einem zweiten Funkendgerät (10) kommuniziert, das in der zweiten Überwachungseinheit (10) enthalten ist.

18. Verfahren nach Patentanspruch 17, wo das zweite Funkendgerät (10) die Überwachungsdaten mit einem vorgegebenen Intervall über eine Basisstation (6,16) in dem zweiten Funkkommunikationssystem (5) zum ersten Funkendgerät (13) sendet.

19. Verfahren nach Patentanspruch 18, bei dem die erste Überwachungseinheit (9) mit einer Steuereinrichtung (14) feststellt, ob die Überwachungsdaten von dem zweiten Funkendgerät (10) innerhalb des vorgegebenen Zeitintervalls empfangen werden.

20. Verfahren nach Patentanspruch 19, wo eine Schalteinrichtung (15) in der ersten Überwachungseinheit (9) die erste Basisstationssteuereinheit (3) mit der ersten Basisstation (2) über die Übertragungsverbindung (4) verbindet, wenn die Steuereinrichtung (14) feststellt, dass die Überwachungsdaten innerhalb des Zeitintervalls empfangen werden.

21. Verfahren nach Patentanspruch 20, bei dem das zweite Funkendgerät (10) in erster Linie die Überwachungsdaten über die zweite Basisstation (6) sendet und im Falle, dass die Steuereinheit (14) nicht feststellt, dass die Überwachungsdaten innerhalb des Zeitintervalls empfangen werden, eine Verbindung mit dem ersten Funkendgerät (13) über eine dritte Basisstation (16) einrichtet, die zu dem zweiten Funkkommunikationssystem (5) gehört.

22. Verfahren nach Patentanspruch 21, wo die Schalteinrichtung (15) die erste Basisstationssteuereinheit (3) über das erste Funkendgerät (13) über das zweite Funkkommunikationssystem (5), über das zweite Funkendgerät (10) mit der ersten Basisstation (2) in dem Fall verbindet, dass die Steuereinheit (14) die Überwachungsdaten innerhalb des Zeitintervalls nicht feststellt.

23. Verfahren nach Patentanspruch 22, wo das erste (1) und das zweite (5) Funkkommunikationssystem paketvermittelte Übertragung mit kleiner Bandbreite liefern, vorzugsweise weniger als 64 kbit/s.

24. Verfahren nach Patentanspruch 23, wo das erste Funkkommunikationssystem (1) Küstenradio ist.

25. Verfahren nach Patentanspruch 23, wo das erste Funkkommunikationssystem (1) TETRA ist.

26. Verfahren nach Patentanspruch 23, wo das erste Funkkommunikationssystem (1) Mobitex ist.

27. Verfahren nach einem der Patentansprüche 16-26, wo das zweite Funkkommunikationssystem (5) GPRS ist.

## Revendications

1. Dispositif permettant la redondance de transmission d'un premier système de radiocommunication (1), dans lequel une connexion de transmission (4) est agencée pour une communication entre une première unité de commande de station de base (3) et une première station de base (2), multiplexée avec une communication entre une deuxième unité de commande de station de base (7) et une deuxième station de base (6) dans un deuxième système de radiocommunication (5), ces stations de base (2, 6) étant situées ensemble dans un site de stations de base (8), **caractérisé en ce qu'**il comprend une première unité de supervision (9) connectée à la dite première unité de commande de station de base (3), agencée pour connecter sélectivement la dite première unité de commande de station de base (3) à la dite première station de base (2) via la dite connexion de transmission (4), ou via une troisième station de base (16) située dans le dit deuxième système de radiocommunication (5) à une deuxième unité de supervision (19), connectée à la dite première station de base (2), en fonction de données de supervision fournies par la dite deuxième unité de supervision (10).

2. Dispositif selon la revendication 1, comprenant un premier multiplexeur / démultiplexeur (11), agencé pour connecter les unités de commande de station de base respectives (3, 7) à la dite connexion de transmission (4).

3. Dispositif selon la revendication 2, comprenant un deuxième multiplexeur / démultiplexeur (12), agencé pour connecter tes stations de base respectives (2, 6) à la dite connexion de transmission (4).

4. Dispositif selon la revendication 3, dans lequel la dite connexion de transmission (4) comprend un câble.

5. Dispositif selon la revendication 4, dans lequel la dite première unité de supervision (9) comprend un premier terminal radio (13) et dans lequel la dite deuxième unité de supervision comprend un deuxième terminal radio (10), ces terminaux radio (10, 13) étant agencés pour communiquer via une station de base (6, 16) dans ledit deuxième système de radiocommunication (5).

6. Dispositif selon la revendication 5, dans lequel le dit deuxième terminal radio (10) est agencé pour transmettre, avec un intervalle donné, les dites données de supervision, via une station de base (6, 16) dans le dit deuxième système de radiocommunication (5), au dit premier terminal radio (13).

7. Dispositif selon la revendication 6, dans lequel la dite première unité de supervision (9) comprend un dispositif de contrôle (14) prévu pour détecter si les dites données de supervision sont reçues en provenance du dit deuxième terminal radio (10) avec le dit intervalle de temps donné.

8. Dispositif selon la revendication 7, dans lequel un dispositif de commutation (15) dans la dite première unité de supervision (9) est agencé pour connecter, lorsque le dit dispositif de contrôle (14) détecte que les dites données de supervision sont reçues dans les limites du dit intervalle de temps, la dite première unité de commande de station de base (3) à la dite première station de base (2) via la dite connexion de transmission (4).

9. Dispositif selon la revendication 8, dans lequel le dit deuxième terminal radio (10) est agencé pour transmettre en priorité les dites données de supervision via la dite deuxième station de base (6) et, dans le cas où le dit dispositif de contrôle (14) ne détecte pas que les dites données de supervision sont reçues dans les limites du dit intervalle de temps, établir une connexion avec le dit premier terminal radio (13) via une troisième station de base (16) appartenant au dit deuxième système de radiocommunication (5).

10. Dispositif selon la revendication 9, dans lequel le dit dispositif de commutation (15), dans le cas où le dit dispositif de contrôle (14) ne détecte pas les dites données de supervision dans les limites du dit intervalle de temps, est agence pour connecter la dite première unité de commande de station de base (3), via le dit premier terminal radio (13), sur le dit deuxième système de radiocommunication (5) et, via le dit deuxième terminal radio (10), à la dite première station de base (2).

11. Dispositif selon la revendication 10, dans lequel les dits premier (1) et deuxième (5) systèmes de radiocommunication effectuent une transmission commutée par paquets avec une petite largeur de bande, de préférence inférieure à 64 kbit/s.

12. Dispositif selon la revendication 11, dans lequel le dit premier système de radiocommunication (1) est une radio côtière.

13. Dispositif selon la revendication 11, dans lequel te dit premier système de radiocommunication (1) est TETRA.

14. Dispositif selon la revendication 11, dans lequel le dit premier système de radiocommunication (1) est Mobitex.

15. Dispositif selon une quelconque des revendications précédentes, dans lequel le dit deuxième système de radiocommunication (5) est GPRS.

16. Procédé pour effectuer une redondance de transmission d'un système de radiocommunication (1), dans lequel une connexion de transmission (4) est agencée pour une communication entre une première unité de commande de station de base (3) et une première station de base (2) dans un site de stations de base (8), multiplexée avec une communication entre une deuxième unité de commande de station de base (7) et une deuxième station de base (6) dans un deuxième système de radiocommunication (5), ces stations de base (2, 6) étant situées ensemble dans le dit site (8),
**caractérisé par** les étapes de :
transmission de données de supervision par une deuxième unité de supervision (10), connectée à la dite première station de base (2), à une première unité de supervision (9) connectée à la dite première unité de commande de station de base (3) ;
connexion sélective de la dite première unité de commande de station de base (3) à la dite première station de base (2), via la dite connexion de transmission (4) ou via une troisième station de base (16) située dans le dit deuxième système de radiocommunication (4) et la dite deuxième unité de supervision (10), en fonction des données de supervision fournies par la dite deuxième unité de supervision (10).

17. Procédé selon la revendication 16, dans lequel un premier terminal radio (13) inclus dans la première unité de supervision (9) communique via une station de base (6, 16) dans le dit deuxième système de radiocommunication (5) avec un deuxième terminal radio (10) inclus dans la deuxième unité de supervision (10).

18. Procédé selon la revendication 17, dans lequel le dit deuxième terminal radio (10) transmet les dites données de supervision avec un intervalle donné, via une station de base (6, 16) dans le dit deuxième système de radiocommunication (5), au dit premier terminal radio (13).

19. Procédé selon la revendication 18, dans lequel la dite première unité de supervision (9) avec un dispositif de contrôle (14) détecte si les dites données de supervision sont reçues du dit deuxième terminal radio (10) dans les limites du dit intervalle de temps donné.

20. Procédé selon la revendication 19, dans lequel un dispositif de commutation (15) dans la dite première unité de supervision (9) connecte la dite pemière unité de commande de station de base (3) à la dite première station de base (2) via la dite connexion de transmission (4), lorsque le dit dispositif de contrôle (14) détecte que les dites données de supervision sont reçues dans les limites du dit intervalle de temps.

21. Procédé selon la revendication 20, dans lequel le dit deuxième terminal radio (10) transmet en priorité les dites données de supervision via la dite deuxième station de base (6) et, dans le cas où le dit dispositif de contrôle (14) ne détecte pas que les dites données de supervision sont reçues dans les limites du dit intervalle de temps, il établit une connexion avec le dit premier terminal radio (13) via une troisième station de base (16) appartenant au dit deuxième système de radiocommunication (5).

22. Procédé selon ta revendication 21, dans lequel le dit dispositif de communication (15) connecte la dite première unité de commande de station de base (3) via le dit premier terminal radio (13) sur le dit deuxième système de radiocommunication (5), via le dit deuxième terminal radio (10) à la dite première station de base (2), dans le cas où le dit dispositif de contrôle (14) ne détecte pas tes dites données de supervision dans tes limites du dit intervalle de temps.

23. Procédé selon la revendication 22, dans lequel les dits premier (1) et deuxième (5) systèmes de radiocommunication effectuent une transmission commutée par paquets avec une petite largeur de bande, de préférence inférieure à 64 kbit/s.

24. Procédé selon la revendication 23, dans lequel le dit premier système de radiocommunication (1) est une radio côtière.

25. Procédé selon la revendication 23, dans lequel le dit premier système de radiocommunication (1) est TETRA.

26. Procédé selon la revendication 23, dans lequel le premier système de radiocommunication (1) est Mobitex.

27. Procédé selon une quelconque des revendications 16 à 26, dans lequel le dit deuxième système de radiocommunication (5) est GPRS.
